# EUROPÄISCHE PATENTANMELDUNG

(11) **EP 3 537 383 A1**
(43) Veröffentlichungstag der Anmeldung: **11.09.2019**
(21) Anmeldenummer: 19156837.7
(22) Anmeldetag: 13.02.2019
(51) Int. Cl.: G06T 11/20

(54) **SCHWINGUNGSÜBERWACHUNG EINES OBJEKTS MITTELS VIDEOKAMERA**

(30) Priorität: 05.03.2018 DE 102018104913
(71) Anmelder: Prüftechnik Dieter Busch GmbH, 85737 Ismaning (DE)
(72) Erfinder: Jährig, Oliver, 85737 Ismaning (DE)

(57) **Zusammenfassung**

Die Erfindung betrifft ein Verfahren zur Schwingungsüberwachung eines Objekts (12), wobei mittels einer Video-Kamera (14) Video-Daten mindestens eines Bereichs des Objekts in Form einer Mehrzahl von Frames gewonnen werden; für jeden Frame aus den Video-Daten Pixel-Geschwindigkeiten ermittelt werden; für jedes Pixel aus den ermittelten Pixel-Geschwindigkeiten der Frames eine Pixel-Bewegungsenergie ermittelt wird; ein Einzelframe aus den Video-Daten festgelegt wird; ein Darstellungsschwellwert für die ermittelten Pixel-Bewegungsenergien festgelegt wird; und eine Darstellung ausgegeben wird, bei welcher der Einzelframe mit einer Darstellung der Verteilung der ermittelten Pixel-Bewegungsenergien überlagert wird, wobei für Pixel, deren ermittelte Bewegungsenergie unterhalb des Darstellungsschwellwerts liegt, keine Darstellung der Bewegungsenergie erfolgt.

## Beschreibung

Die vorliegende Erfindung betrifft ein Verfahren und ein System zur Schwingungsüberwachung eines Objekts.

Das Erfassen und Analysieren von Schwingungen sind ein wesentlicher Bestandteil bei der Zustandsüberwachung von schwingenden Objekten, insbesondere Maschinen oder Maschinenteilen. Eine Möglichkeit zur Schwingungserfassung besteht in der Verwendung von an dem Maschinengehäuse angebrachten Schwingungssensoren. Dies erlaubt jedoch nur punktuelle Messungen in bestimmten Bereichen der Maschine.

Eine räumlich detailliertere Schwingungsanalyse bieten bildgebende Verfahren, wobei mittels Videoanalyse die Bewegung von Bildpunkten, und somit auch Schwingungsintensitäten, bestimmt werden können. Videobasierte Verfahren zur Erfassung der Bewegung von Bildpunkten sind beispielsweise in der US 2016/0217588 A1 beschrieben.

Ferner ist es bekannt, Videodaten so zu bearbeiten, dass die Bewegung von Bildpunkten verstärkt dargestellt wird, so dass Bewegungen mit kleinen Auslenkungen für den Betrachter deutlicher zu erkennen sind. Beispiele für solche Bewegungsverstärkungsverfahren sind unter anderem in der US 9,338,331 B2, US 2016/0300341 A1, WO 2016/196909 A1, US 2014/0072190 A1, US 2015/0215584 A1 sowie US 9,324,005 B2 genannt. Ferner wird von der Firma RDI Technologies, Inc., Knoxville, USA, ein System unter der Bezeichnung "Iris M" vertrieben, welches mittels einer Videokamera aufgenommene Objektbewegungen verstärkt darstellen kann, wobei für manuell auswählbare interessante Bereiche des Objekts Zeitverläufe und Frequenzspektren dargestellt werden können.

Es ist Aufgabe der vorliegenden Erfindung, ein Verfahren und System zur Schwingungsüberwachung von Objekten zu schaffen, welches nutzerfreundlich ist und auf anschauliche Weise aussagekräftige Ergebnisse liefern kann.

Diese Aufgabe wird erfindungsgemäß gelöst durch ein Verfahren gemäß Anspruch 1 sowie ein System gemäß Anspruch 15.

Bei der erfindungsgemäßen Lösung wird eine Darstellung des Objekts ausgegeben, bei welcher ein Einzelframe, der aus den Videodaten festgelegt wird, mit einer Darstellung der Verteilung der aus den Videodaten ermittelten Pixel-Bewegungsenergien überlagert wird, wobei für Pixel, deren ermittelte Bewegungsenergie unterhalb eines Darstellungsschwellwerts liegt, keine Darstellung der Bewegungsenergie erfolgt. Durch eine solche teilweise transparente Darstellung des Objekts mit den ermittelten Schwingungsintensitäten wird eine direkte Sichtbarkeit von schwingungsmäßig relevanten Bereichen erzielt, was insbesondere auch einen guten Gesamtüberblick hinsichtlich der Schwingungsintensitäten eines komplexen Objekts ermöglicht.

Bevorzugte Ausgestaltungen der Erfindung sind in den abhängigen Ansprüchen angegeben.

Im Folgenden wird die Erfindung anhand der beigefügten Zeichnungen beispielhaft näher erläutert. Dabei zeigen:
- Fig. 1: eine schematische Darstellung eines Beispiels eines Systems zur Schwingungsüberwachung eines Objekts;
- Fig. 2: ein Beispiel für die Darstellung der Schwingungsenergie eines Objekts in x-Richtung durch das System von Fig. 1;
- Fig. 3: eine Ansicht wie in Fig. 2, wobei jedoch die Schwingungsenergie in y-Richtung dargestellt ist;
- Fig. 4: eine Ansicht wie in Fig. 2 und 3, wobei jedoch die Gesamtschwingungsenergie in x- und y-Richtung dargestellt ist; und
- Fig. 5: ein Flussdiagramm eines Beispiels eines Verfahrens zur Schwingungsüberwachung eines Objekts.

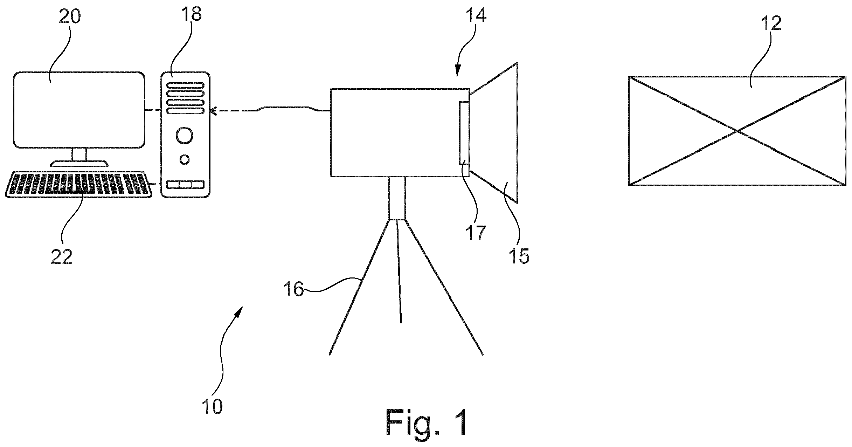

In Fig. 1 ist ein Beispiel für ein System 10 zur Schwingungsüberwachung eines Objekts 12 schematisch gezeigt. Bei dem Objekt kann es sich beispielsweise um eine Maschine, z.B. eine rotierende Maschine, oder eine Maschinenkomponente handeln. Das System 10 umfasst eine Videokamera 14 mit einem Stativ 16, welche mit einer Datenverarbeitungseinrichtung 18 verbunden ist, sowie eine Ausgabeeinrichtung 20 zum graphischen Darstellen von Messergebnissen. Die Videokamera 14 weist ein Objektiv 15 und einen Bildsensor 17 auf. Die Datenverarbeitungseinrichtung 18 umfasst typischerweise auch eine Benutzerschnittstelle 22, um Daten und/oder Befehle in die Datenverarbeitungseinrichtung 18 einzugeben. Die Datenverarbeitungseinrichtung 18 kann beispielsweise als Personal Computer, Notebook oder Tablet-Computer ausgebildet sein. Bei der Ausgabeeinrichtung handelt es sich typischerweise um einen Bildschirm.

Mittels der Videokamera 14 werden Videodaten mindestens eines Bereichs des Objekts 12 in Form einer Mehrzahl von Frames gewonnen. Für die Auswertung der Videodaten werden diese zunächst von der Kamera 14 an die Datenverarbeitungseinrichtung 18 übertragen bzw. eingelesen.

Falls erforderlich, insbesondere falls das Video eine zu große Auflösung besitzt oder zu stark rauscht, kann dann eine Verkleinerung der Videoauflösung vorgenommen werden, insbesondere unter Verwendung von Faltungsmatrizen. Dies kann beispielsweise durch Verwendung einer geeigneten Pyramide, beispielsweise einer Gauß-Pyramide, erfolgen. Bei solchen an sich bekannten Verfahren stellt das Originalbild die unterste Pyramidenstufe dar, und die nächsthöhere Stufe wird jeweils durch das Bild und darauffolgendem Downsampling des geglätteten Bilds erzeugt, wobei in x- und y-Richtung jeweils die Auflösung um einen Faktor 2 reduziert wird (auf diese Weise wird die Wirkung eines räumlichen Tiefpasses erzielt, wobei in jeder Dimension die Zahl der Pixel auf die Hälfte reduziert wird). Bei einer dreistufigen Pyramide wird dann entsprechend in jeder Dimension die Auflösung um den Faktor 8 reduziert. Auf diese Weise kann die Genauigkeit der nachfolgenden Geschwindigkeitsberechnung erhöht werden, da störendes Rauschen minimiert wird. Diese Auflösungsreduzierung wird für jeden Frame des eingelesenen Videos durchgeführt, sofern die räumliche Auflösung der Videodaten einen bestimmten Schwellwert übersteigt und/oder das Rauschen der Videodaten einen bestimmten Schwellwert übersteigt.

Ferner kann das Video vor der Auswertung durch einen Bewegungsverstärkungsalgorithmus ("motion amplification") bearbeitet werden, durch den Bewegungen in verstärkter Form dargestellt werden, so dass der Betrachter auch noch kleine Bewegungsauslenkungen gut erkennen kann. Sofern eine Verkleinerung der Videoauflösung vorgenommen wird, erfolgt die Anwendung des Bewegungsverstärkungsalgorithmus vor der Verkleinerung der Videoauflösung.

Im nächsten Schritt wird dann für jeden Frame und alle Pixel des Originalvideos bzw. des auflösungsreduzierten Videos der optische Fluss ermittelt, wobei dies vorzugsweise unter Verwendung eines Lucas-Kanade-Verfahrens erfolgt (dabei werden immer zwei aufeinanderfolgende Frames miteinander verglichen), wobei aber grundsätzlich auch andere Verfahren verwendet werden können. Als Ergebnis erhält man für jeden Frame für jedes Pixel die aktuelle Pixelgeschwindigkeit in der Einheit "Pixel/Frame". Da bei einem Video die Frames in konstantem zeitlichem Abstand aufgenommen werden, entspricht die Framenummer dem physikalischen Parameter "Zeit". Man erhält also letztlich aus der Geschwindigkeitsberechnung ein 3D-Array mit den beiden räumlichen Koordinaten x und y, welche die Pixelposition angeben, sowie der dritten Dimension "Zeit", die durch die Framenummer gegeben ist.

Im nächsten Schritt wird auf der Basis der ermittelten Pixelbewegungsgeschwindigkeiten aller Frames für jeden Pixel eine für die Pixelbewegungsenergie - und damit für die Schwingungsintensität in diesem Pixel - repräsentative Größe ermittelt (im Folgenden als "Pixelbewegungsenergie" bezeichnet, wobei dies beispielsweise als RMS ("Root Mean Square") der Pixelgeschwindigkeiten der einzelnen Frames erfolgen kann, d.h. die Pixelbewegungsenergie ergibt sich als Quadratwurzel aus einer normierten quadratischen Summe der Geschwindigkeiten für diesen Pixel in den einzelnen Frames (dabei wird die quadratische Summe der Geschwindigkeiten des Pixels in jedem Frame durch die um eins verringerte Gesamtanzahl der Frames geteilt, wobei dann aus dem so ermittelten Wert die Quadratwurzel gezogen wird).

Die Pixelbewegungsenergie wird dabei für zwei unterschiedliche orthogonale Schwingungsrichtungen separat berechnet, d.h. im vorhergehenden Schritt wird der optische Fluss, d.h. die Pixelgeschwindigkeit, für jeden Frame und alle Pixel in die x-Richtung und in die y-Richtung separat berechnet, und aus der Pixelgeschwindigkeit in die x-Richtung wird dann der RMS der Pixelgeschwindigkeit in x-Richtung ermittelt, und aus dem optischen Fluss, d.h. der Pixelgeschwindigkeit, in y-Richtung wird der RMS der Pixelgeschwindigkeit in y-Richtung berechnet. Man erhält also ein 2D-Array mit den Pixelbewegungsenergien in x-Richtung und ein 2D-Array mit der Pixelbewegungsenergie in y-Richtung. Aus diesen beiden Einzelarrays kann dann durch vektorielle Addition eine kombinierte Pixelbewegungsenergie bzw. Gesamt-Pixelbewegungsenergie ermittelt werden.

Die ermittelte Pixelbewegungsenergie wird vorzugsweise in eine physikalische Geschwindigkeitseinheit, d.h. Weg/Zeit, umgerechnet (aus der Einheit Pixel/Frame, die sich aus dem optischen Fluss ergibt), so dass man beispielsweise die Einheit mm/s erhält (wie oben erwähnt, ist mit "Pixelbewegungsenergie" eine Größe bezeichnet, die für die Schwingungsenergie in einem Pixel repräsentativ ist; diese muss keine physikalische Energieeinheit haben, sondern kann z.B. die Quadratwurzel aus einer physikalischen Energie sein, wie im obigen RMS-Beispiel).

Gemäß einem ersten Beispiel kann eine solche Umrechnung dadurch erfolgen, dass eine Abmessung eines in den Videoframes dargestellten Elements physikalisch bestimmt wird (beispielsweise mittels Zollstock, Lineal oder Messschieber), und zwar in x- und y-Richtung, und dann mit der entsprechenden Pixelausdehnung dieses Elements in x- und y-Richtung in den Videoframes verglichen wird. Falls das Bild vor der Berechnung des optischen Flusses in seiner Auflösung reduziert wurde, d.h. verkleinert wurde, muss dies noch durch einen entsprechenden Skalierungsfaktor berücksichtigt werden. Die Einheit "Frames" kann anhand der Anzahl der Frames pro Sekunde in Sekunden umgerechnet werden (diese Information kann aus der Videodatei ausgelesen werden).

Falls das Video vor der Auswertung durch einen Bewegungsverstärkungsalgorithmus bearbeitet wurde, muss dies durch einen entsprechenden Korrekturfaktor bei der Einheitenumrechnung berücksichtigt werden.

Eine andere Möglichkeit zur Umrechnung der Einheiten besteht in der Verwendung von Informationen zur Optik der Kamera und dem Abstand zum aufgenommenen Objekt. Dabei wird die Gegenstandsweite eines in den Videoframes dargestellten Elements bestimmt, und es wird ferner die Brennweite des Videokameraobjektivs 15 und die physikalische Abmessung eines Pixels des Sensors 17 der Videokamera 14 berücksichtigt, um die physikalische Abmessung des dargestellten Elements zu ermitteln und mit der Pixelausdehnung des Elements in den Videoframes zu vergleichen.

Die einzelnen 2D-Arrays der Pixelbewegungsenergien (x-Richtung, y-Richtung, x- und y-Richtung kombiniert) werden, sofern vor der Berechnung des optischen Flusses eine Verkleinerung der Videoauflösung stattgefunden hat, wieder auf die ursprüngliche Auflösung des Videos hochgerechnet (sofern bei diesem Upsampling Werte kleiner als Null auftreten, werden diese in den betreffenden Pixeln gleich Null gesetzt).

Anschließend wird die Ausgabe der so ermittelten Pixelbewegungsenergieverteilungen (x-Richtung, y-Richtung, x- und y-Richtung kombiniert) vorbereitet, indem aus den Videodaten ein Einzelframe ermittelt wird und ein Darstellungsschwellwert der Pixelenergie festgelegt wird, wobei dann eine Überlagerung der jeweiligen Pixelbewegungsenergieverteilung mit dem Einzelframe halbtransparent entsprechend dem Darstellungsschwellwert anhand einer sogenannten "Alphamap" erfolgt. Dabei werden die Pixelbewegungsenergien vorzugsweise farbcodiert dargestellt, d.h. bestimmte Farbstufen entsprechen bestimmten Bereichen der Werte der Pixelbewegungsenergien (beispielsweise können relativ niedrige Pixelbewegungsenergien Grün dargestellt werden, mittlere Pixelbewegungsenergien Gelb und hohe Pixelbewegungsenergien Rot). Dabei erfolgt für Pixel, deren ermittelte Bewegungsenergie unterhalb des Darstellungsschwellwerts liegt, keine Darstellung der Bewegungsenergie in der Überlagerung mit dem Einzelframe, d.h. für Pixel, deren Bewegungsenergie unterhalb des Darstellungsschwellwerts liegt, bleibt die Darstellung vollständig transparent. Das Überlagerungsbild wird dann an den Benutzer ausgegeben, beispielsweise über den Bildschirm 20, und es kann abgespeichert und/oder über entsprechende Schnittstellen/Kommunikationsnetzwerke weiter verbreitet werden.

Der für die Überlagerung verwendete Einzelframe kann beispielsweise einfach aus den Videoframes ausgewählt werden (man nimmt zum Beispiel den ersten Frame) oder der Einzelframe wird durch eine Verarbeitung mehrerer Videoframes ermittelt, beispielsweise als Medianbild. Da die Schwingungsauslenkungen typischerweise relativ klein sind, ist die Auswahl des Einzelframes in der Regel nicht kritisch (die Ermittlung eines Medianbilds ist aus den Medienwerten der Intensitäten zwar aufwendiger, das Medianbild ist jedoch auch rauschärmer als ein einzelnes Bild).

Der Darstellungsschwellwert kann beispielsweise manuell vom Benutzer ausgewählt werden, oder er kann automatisch als Funktion mindestens einer Kennzahl der Pixelbewegungsenergien festgelegt werden. Beispielsweise kann der Darstellungsschwellwert von einem Mittelwert der Pixelbewegungsenergien und der Standardabweichung der Pixelbewegungsenergien abhängen. Insbesondere kann der Darstellungsschwellwert zwischen dem Mittelwert der Pixelbewegungsenergien und dem Mittelwert der Pixelbewegungsenergien plus drei Mal die Standardabweichung der Pixelbewegungsenergien liegen (beispielsweise kann der Darstellungsschwellwert dem Mittelwert der Pixelbewegungsenergien plus einmal die Standardabweichung der Pixelbewegungsenergie entsprechen).

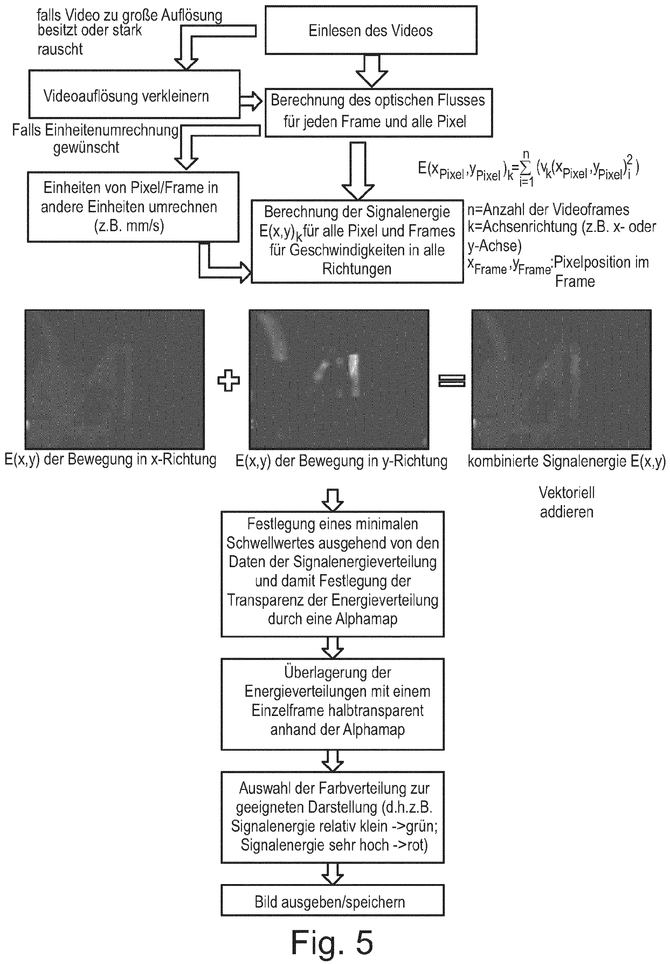

In Fig. 5 ist ein Flussdiagramm für ein Beispiel eines Verfahrens zur Schwingungsüberwachung eines Objekts mittels Videoanalyse gezeigt. Die von dem Verfahren ausgegebene halbtransparente Überlagerung der Pixelbewegungsenergien mit einem Einzelframe kann als Input in einem üblichen Schwingungsüberwachungsverfahren verwendet werden, in welchem diese Informationen beispielsweise von einem Nutzer inspiziert werden.

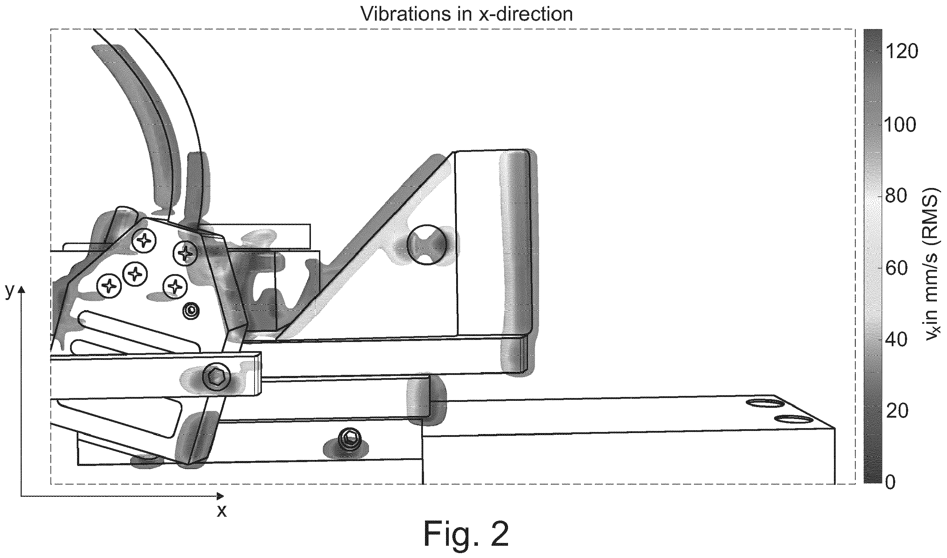

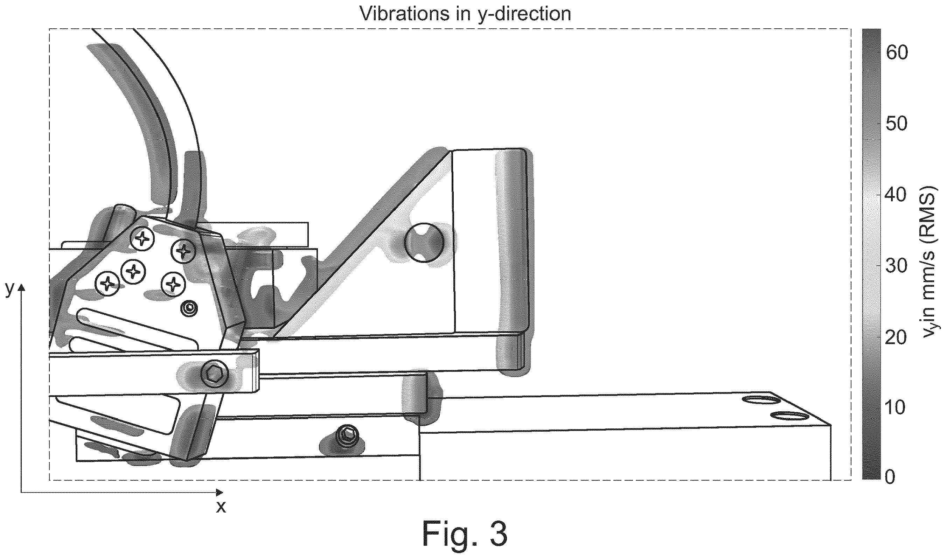

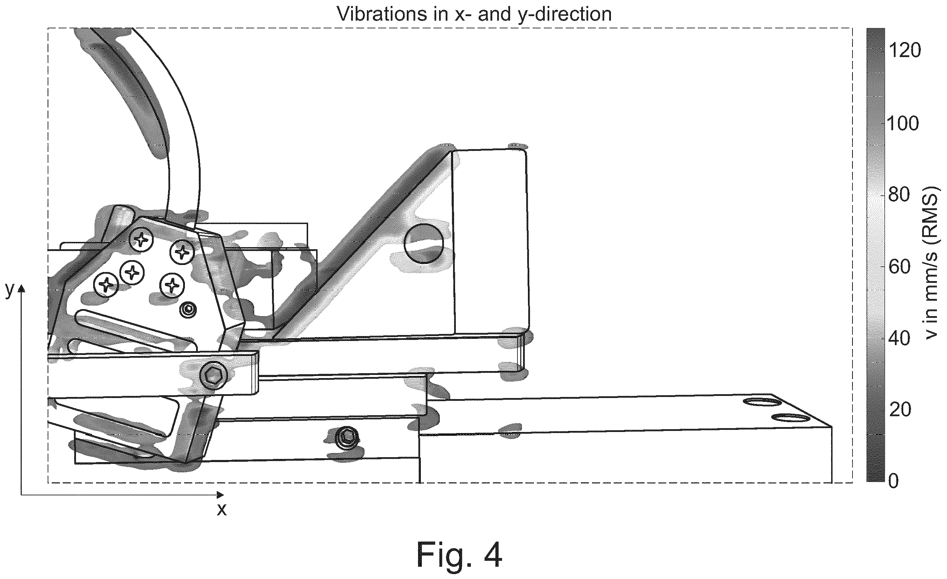

In den Fign. 2 bis 4 ist ein Beispiel einer halbtransparenten überlagerten Darstellung eines Einzelframes eines Maschinenteils mit Pixelbewegungsenergieverteilungen in x-Richtung, y-Richtung bzw. in kombinierter x- und y-Richtung zu sehen.

## Patentansprüche

1. Verfahren zur Schwingungsüberwachung eines Objekts (12), wobei
mittels einer Video-Kamera (14) Video-Daten mindestens eines Bereichs des Objekts in Form einer Mehrzahl von Frames gewonnen werden;
für jeden Frame aus den Video-Daten Pixel-Geschwindigkeiten ermittelt werden;
für jedes Pixel aus den ermittelten Pixel-Geschwindigkeiten der Frames eine Pixel-Bewegungsenergie ermittelt wird;
ein Einzelframe aus den Video-Daten festgelegt wird;
ein Darstellungs-Schwellwert für die ermittelten Pixel-Bewegungsenergien festgelegt wird; und
eine Darstellung ausgegeben wird, bei welcher der Einzelframe mit einer Darstellung der Verteilung der ermittelten Pixel-Bewegungsenergien überlagert wird, wobei für Pixel, deren ermittelte Bewegungsenergie unterhalb des Darstellungs-Schwellwerts liegt, keine Darstellung der Bewegungsenergie erfolgt.

2. Verfahren gemäß Anspruch 1, **dadurch gekennzeichnet, dass** der Darstellungs-Schwellwert manuell oder als Funktion mindestens einer Kennzahl der Pixel-Bewegungsenergien festgelegt wird.

3. Verfahren gemäß Anspruch 2, **dadurch gekennzeichnet, dass** der Darstellungs-Schwellwert von einem Mittelwert der Pixel-Bewegungsenergien und der Standardabweichung der Pixel-Bewegungsenergien abhängt.

4. Verfahren gemäß Anspruch 3, **dadurch gekennzeichnet, dass** der Darstellungs-Schwellwert zwischen dem Mittelwert der Pixel-Bewegungsenergien und dem Mittelwert der Pixel-Bewegungsenergien plus 3 mal die Standardabweichung der Pixel-Bewegungsenergien liegt.

5. Verfahren gemäß einem der vorhergehenden Ansprüche, **dadurch gekennzeichnet, dass** die Video-Daten vor der Ermittlung der Pixel-Geschwindigkeiten hinsichtlich ihrer räumlichen Auflösung reduziert werden, insbesondere unter Verwendung Faltungsmatrizen, wie z.B. in Form einer Gauß-Pyramide, falls die räumliche Auflösung der Video-Daten einen Schwellwert übersteigt und/oder das Rauschen der Video-Daten einen Schwellwert übersteigt.

6. Verfahren gemäß einem der vorhergehenden Ansprüche, **dadurch gekennzeichnet, dass** bei der Ermittlung der Pixel-Geschwindigkeiten der optische Fluss für jedes Pixel ermittelt wird.

7. Verfahren gemäß Anspruch 6, **dadurch gekennzeichnet, dass** der optische Fluss mittels eines Lucas-Kanade-Verfahrens ermittelt wird.

8. Verfahren gemäß einem der vorhergehenden Ansprüche, **dadurch gekennzeichnet, dass** die Pixel-Bewegungsenergie für jeden Pixel als RMS der Pixel-Geschwindigkeiten berechnet wird, wobei sich die Pixel-Bewegungsenergie als Quadratwurzel aus einer normierten quadratischen Summe der Pixel-Geschwindigkeiten ergibt.

9. Verfahren gemäß einem der vorhergehenden Ansprüche, **dadurch gekennzeichnet, dass** die Pixel-Bewegungsenergie für mindestens zwei unterschiedliche, insbesondere orthogonale, Schwingungsrichtungen separat berechnet wird, wobei die Pixel-Bewegungsenergie für die unterschiedlichen Schwingungsrichtungen separat dargestellt wird und/oder als Gesamt-Pixel-Bewegungsenergie durch Addition der Pixel-Bewegungsenergie für die unterschiedlichen Schwingungsrichtungen dargestellt wird.

10. Verfahren gemäß einem der vorhergehenden Ansprüche, **dadurch gekennzeichnet, dass** die ermittelte Pixel-Bewegungsenergie in eine physikalische Geschwindigkeitseinheit als Weg/Zeit umgerechnet wird.

11. Verfahren gemäß Anspruch 10, **dadurch gekennzeichnet, dass** bei der Umrechnung der ermittelten Pixel-Bewegungsenergie in eine physikalische Geschwindigkeitseinheit eine Abmessung eines in den Video-Frames dargestellten Elements (12) physikalisch bestimmt wird und mit der Pixelausdehnung des Elements in den Video-Frames verglichen wird.

12. Verfahren gemäß Anspruch 10, **dadurch gekennzeichnet, dass** bei der Umrechnung der ermittelten Pixel-Bewegungsenergie in eine physikalische Geschwindigkeitseinheit die Gegenstandsweite eines in den Video-Frames dargestellten Elements bestimmt wird und ferner die Brennweite des Objektivs (15) der Video-Kamera (14) und die physikalische Abmessung eines Pixels des Sensors (17) der Video-Kamera berücksichtigt werden, um eine physikalische Abmessung des Elements zu ermitteln und mit der Pixelausdehnung des Elements in den Video-Frames zu vergleichen.

13. Verfahren gemäß einem der vorhergehenden Ansprüche, **dadurch gekennzeichnet, dass** der Einzelframe aus der Mehrzahl der Video-Frames ausgewählt wird oder als Medianbild aus den Video-Frames ermittelt wird.

14. Verfahren gemäß einem der vorhergehenden Ansprüche, **dadurch gekennzeichnet, dass** die Pixel-Bewegungsenergien farbcodiert dargestellt werden, wobei bestimmte Farbstufen bestimmten Bereichen der Werte der Pixel-Bewegungsenergien zugeordnet sind.

15. System zur Schwingungsüberwachung eines Objekts (12), mit:
einer Video-Kamera (14) zum Gewinnen von Video-Daten mindestens eines Bereichs des Objekts in Form einer Mehrzahl von Frames,
einer Datenverarbeitungseinheit (18) zum Ermitteln von Pixel-Geschwindigkeiten aus den Video-Daten für jeden Frame, zum Ermitteln von Pixel-Bewegungsenergien für jedes Pixel aus den Pixel-Geschwindigkeiten der Frames, und zum Festlegen eines Darstellungs-Schwellwerts der Pixel-Bewegungsenergie, sowie
einer Ausgabeeinheit (18, 20) zum Überlagern eines aus den Video-Daten ermittelten Einzelframes mit einer Darstellung der Verteilung der Pixel-Bewegungsenergie, wobei für Pixel, deren Bewegungsenergie unterhalb des Darstellungs-Schwellwerts liegt, keine Darstellung der Bewegungsenergie erfolgt.
